# EUROPEAN PATENT APPLICATION

(11) **EP 0 921 666 A2**
(43) Date of publication of application: **09.06.1999**
(21) Application number: 98309853.4
(22) Date of filing: 01.12.1998
(51) Int. Cl.: H04L 29/06

(54) **Speech reception via a packet transmission facility**

(30) Priority: 02.12.1997 US 982925
(71) Applicant: NORTHERN TELECOM LIMITED, Montreal, Quebec H2Y 3Y4 (CA)
(72) Inventor: Ward, David Philip, Belleville, Ontario K8P 4N8 (CA); Cheung, Cuthbert, Belleville, Ontario K8P 4J9 (CA); Marshall, John, Belleville, Ontario K8P 4H6 (CA)
(74) Representative: Cage, John David

(57) **Abstract**

Degradations in packetized voice communications received by a non-synchronized entity, via a packet network, are reduced by adjusting a depth of storage in a jitter buffer of the receiving entity. Units of voice samples data are stored in the jitter buffer as they are received. Stored units are normally extracted and delivered to a processor one at a time at a regular rate for the generation of audible speech. From time to time the rate of extraction can be accelerated by extracting two units while delivering only one. Also the rate of extraction can be retarded by not extracting a unit while delivering a substitute unit in place of the unit that would normally have been extracted. The depth of storage is thereby controllable in response to packet reception events such that delay is minimized while yet providing sufficient delay to smooth variances between reception events.

## Description

### Field of the Invention

The invention is in the field of speech communications and more particularly the invention is concerned with the reception and reproduction of speech received in packets having been transported via a communications facility operated in accordance with an Internet Protocol (IP).

### Background of the Invention

Traditionally conversations between distant parties have been carried via telephone facilities. The art of telephony is primarily concerned with the transmission and reception of speech signals. In contrast, the art of telegraphy has traditionally been restricted to the transmission and reception of data signals. Historically, in both telephony and telegraphy a communication path was provided throughout the duration of each telephone conversation or data transmission.

Telephony has evolved such that digitally encoded speech signals, similar in nature to data signals, are transmitted via time division multiplex (TDM) networks including TDM circuit switches. Hence telephone systems also readily provide for transmissions of data signals. In telephony, regardless of the nature of information encoded in the signals, a communications channel is exclusively assigned to each telephone conversation or data connection throughout its entire duration.

Telegraphy has evolved such that the handling of data signals is typically provided for in data networks including packet switches. Such data networks are often referred to as packet systems. In contrast to a telephone system, a real time communication paths are only provided for a data communication from time to time, dependent upon there being at least a minimal amount of data waiting to be transmitted. In other words, data signals are transmitted in bursts via communication paths momentarily assigned to any one of many on going data communications on an as needed basis. For this reason extremely efficient data transport can be had via packet systems as compared with telephone systems which must assign many communication paths, each of which is an exclusive communication path for a corresponding one of the many data connections.

Ever since the first practical packet systems were put into service there has been a desire to take advantage of the efficiency of packet systems for the transmission of the digitally encoded speech signals used in telephony. One of the most efficient and convenient and widely available data communications services is provided by the well known Internet. The Internet is implemented across various packet systems, operated in accordance with the Internet Protocol (IP). The IP is convenient as it permits communications from any source to any destination without the source and destination having to perform any actions in concert. In the last few years voice communication via personal computers using the IP has become popular. By transmission and reception of time stamped packets of voice data, voice conversations somewhat the equivalent to telephone service are frequently possible.

A growing number of personal computer (PC) users subscribe to data communications services via the Internet. Internet services are provided via data networks operated in accordance with the Internet protocol (IP). Data networks are interfaced with the public telephone systems such that Internet services are available at almost any standard analog telephone line. A wider bandwidth connection can be had via a telephone system offering ISDN service or by directly connecting with a data network for example using an Ethernet link. In spite of intense compression required in order to transmit digitally encoded speech signals via the standard analog telephone line, Internet speech connections have been demonstrated using a personal computer having a microphone and a speaker and appropriate software or a combination of specialized hardware and interfacing software. The attraction for simulating telephony via the Internet is the relatively very low cost, typically less than a dollar an hour. If one has already invested in a personal computer with the typical attendant processing software for using Internet services, the added cost of telephony via the Internet is no more than the cost of software. Software application know by the trademarks COOLTALK, NETMEETING and IPHONE, each permit PC users to talk with one another via the Internet.

In operation samples are taken synchronously, desirably every 125µ seconds, from a user's microphone analog voice signal and are processed to generate coded speech data signals. The synchronous nature is substantially preserved at the expense of a delay necessitated by collecting the coded signals into data units or frames and to some extent dependent upon other functions being executed by the PC. When one or more frames have been collected these are transmitted as a packet. Each packet includes the address of the intended receiver, a so called time stamp, indicating the time of transmission and the one or more frames of encoded speech data. Several problems detract from the perceived voice quality of audible speech regenerated from signals having been transported by the Internet.

One problem is that voice is time dependent and sampled voice signals are synchronous in nature, while packet systems are asynchronous in nature. In accordance with the IP, data packets are launched toward a destination, without guarantee as to the time of arrival at the intended destination. In other words the delay in arrival of packets at the destination is more or less irregular. Furthermore the order in which the packets arrive can be irregular. Irregularities introduced by transport via the IP must be compensated for at the destination otherwise regenerated speech may be broken and of diminished intelligibility at the destination.

Another problem is that is that voice is time dependent and sampled voice signals are synchronous in nature, while the operations of the source and destination PCs is independent one from the other. The clock in one PC is not synchronized with the clock in the other PC. The rate at which the source PC generates encoded samples is never exactly the same as the rate at which the destination PC processes the received samples. Between any two PCs used for a telephone like conversation there is often a mismatch of more than several parts per thousand. Consequently during a conversation the faster PC tends toward operation in an under flow situation while the slower PC tends toward operation in an overflow condition. The under flow condition results in audible breaks in regenerated speech and is compounded by the irregularities introduced by transport via the IP. The overflow condition may be compensated by an ever expanding queue in the PC but this introduces ever increasing delay in the regeneration of the speech at the destination PC. A delays of several seconds can accumulate during a conversation.

Recently, direct voice access into telephone networks for Internet users has become a commercial reality. This provides a service wherein the PC user may converse directly with a telephone user. The attraction for business enterprise is a new form of communication with a class of customers, Internet users, thought to be more commercially oriented or to have more disposable income than the average individual. In one example a private branch exchange (PBX) is interfaced with an IP network via a voice gateway. The voice gateway is connected via a trunk, line or an IP data link, to transmit and receive packets and is connected via several PBX lines, or a PBX TDM loop to transmit and receive voice signals in the operating protocol of the PBX. A perceived problem in this proposal lies in the realization that through frequent exposure PC users generally become tolerant of degradation and delay in the reproduction of speech, while on the other hand a telephone users unaccustomed to conversing via the IP are less tolerant. The telephone user may interpret conversational delays as a lack of candor or honesty on the part of the other party to the conversation. Such does not bode well for a business enterprise. An other problem may arises in that a telephone user, accustomed to typical telephone voice quality, may react to breaks in the conversation as signifying an equipment malfunction. Such does not bode well for either the PBX manufacturer or the PBX service provider as they may each suffer increased complaints and depreciation of the goodwill associated with their trademarks.

When processing packetized voice signal data which is delivered over a non guaranteed quality of service transport facility such as an Internet, there are two primary facts that contribute to a degradation of audible speech reproduction.

In any exchange of data between any two entities via the IP, it is permitted that each entity operate virtually independent of the other at its own independent clock rate. A clock which governs a rate of consumption of speech data at a receiving entity is not synchronized to a clock which governs a rate of production of the speech data at a transmitting entity. The rates of production and consumption are not exactly the same. This leads to a degradation in the quality of the speech being audibly reproduced. Over a period of time this non-synchronized operation has either one of two consequences at the receiving end. When the receiving end clock is too fast, the rate of consumption of voice data is too fast. The receiving end is starved for data resulting in momentary breaks in speech reproduction. This is sometimes referred to as an under flow. When the receiving end clock is too slow, the rate of consumption of voice data is too slow. The receiving end has insufficient memory to store data such that parts of the data are lost at the receiving end and not all the speech is audible. This is sometimes referred to as an overflow. This delay increases throughout the duration of the conversation and in the extreme has been observed to exceed 5 seconds during a 15 minute conversation.

It is an objective of the invention is to reduce the effects of non-synchronized operation and thereby improve the quality of the perceived speech being audibly reproduced from voice signal data transported via an IP or the like.

Although as before mentioned, the packets are transmitted more or less regularly, the second problem arises from unpredictable delays in the transport of individual packets through the data network operated in accordance with the IP. Due to data network traffic variations, transport time of the packets from the source to the destination is irregular. During an Internet telephone call the IP's dynamically unique data delivery characteristics such as transport delay, variances in transport delay referred to as jitter, and possible loss of packets. The delivery characteristics change, more or less, throughout the course of a single call. Severe jitter may result in an occasional reversal of the order in which two packets should be delivered to the receiving entity. A jitter buffer at the receiving entity, mitigates the jitter by adding yet more delay. Frames from the incoming packets are stored in the jitter buffer, order being maintained with reference to the time stamps. Upon the initiation of a call, consumption is delayed until the jitter buffer exceeds some predetermined amount of fullness whereafter received frames are made available for processing at a regular rate. Hence speech is audibly reproduced via the loudspeaker. Ideally as the rate of delivery fluctuates the fullness of the jitter buffer fluctuates in a corresponding manner, while frames are withdrawn at a regular rate as determined by the clock in the receiving entity for processing. If however the fluctuations are more extreme than expected momentary under flow and or overflow occurrences will be manifest as speech degradation. This can be mitigated by providing more delay in a larger jitter buffer to maintain a smooth flow of voice sample data units for speech generation. Never the less a consequence of longer delay may be an artificially introduced apparent lack of spontaneity and candor on the part of one or both of the parties to the conversation.

It is an objective of the invention to substantially avoid occurrences of under flow while maintaining a minimum delay in an audible reproduction of speech signals transported via an IP or the like.

The second problem of smoothing the jitter is compounded by the first problem. As the jitter buffer tends toward one of the under flow or overflow conditions it becomes progressively less effective. An eventual under flow or overflow is accompanied by very noticeable degradation of the speech reproduction in the forms of unusual pauses or speech deletions.

### Summary of the Invention

In accordance with one aspect of the invention, there is provided a method for controlling a flow of units of voice sample data, preparatory to audibly reproducing speech signals from packetized units of the voice sample data having been transmitted from a transmission source via a packet network facility comprising the steps of:
a) receiving packets of the units of voice data samples, and one after an other storing the units;
b) extracting the stored units one after an other and at a regular rate delivering units for audible reproduction of said speech signals;
c) from time to time determining a difference between the number of stored units awaiting delivery and a target number representing a target delay; and
d) altering the rate of extraction to change the number of the stored units awaiting delivery, whereby a delay in delivery of a stored unit is altered toward the target delay.

In one example the method comprising the further steps of determining a tendency in a range of time intervals between the occurrences of packet reception in step a); and in a case where the range tends toward a reduction, the delay in delivery is correspondingly reduced by momentarily increasing the regular rate; and in a case where the range tends toward an increase, delivery is correspondingly increased by momentarily reducing regular rate.

Another aspect of the invention provides an apparatus for receiving packetized units of the voice data samples having been transmitted from a remote transmission source via a packet network facility and for delivering units of voice sample data to a processing means for audibly reproducing speech signals in response to locally generated clocking pulses, comprises:
a buffer means for receiving packets of the units of voice data samples, and one after another storing the units;
a gate means, being dependent upon said clocking pulses, for extracting the units one after an other from the buffer means, and delivering units at a regular rate to the processing means, whereby speech signals are audibly generated; and
means for controlling the gate means, in response to a difference between a number of units stored in the buffer means and a target number representing a target delay, to from time to time alter the rate at which the units are extracted from the buffer means, whereby an average delay in delivery of voice data units is altered toward the target delay.

In one example the apparatus is embodied in a PC whereby a conversation path from a remote party via a packet network facility operating in accordance with an IP is provided.

In another example the apparatus is embodied in a telephone system for providing conversation paths between user's telephones and user's PCs through a packet network facility operating in accordance with an IP. The telephone system comprises:
a buffer for storing frames of voice data from packets transported via an IP network;
a frame processor for transforming frames of voice data into voice signals consistent with a standard operating voice signal protocol of the telephone system;
a circuit switch for coupling a one of the user's telephones to receive the voice signals;
a substitute register for storing at least one substitute frame of voice data; and
a gate means responsive to a demand from the frame processor for performing any one of the following steps;
   i) extracting two frames of voice data from the buffer while delivering only one of said two frames to the frame processor and thereby reduce the frames stored in the buffer,
   ii) extracting only one frame of voice data from the buffer and delivering said one frame to the frame processor, and
   iii) delivering a copy of the substitute frame of voice data in the substitute register to the frame processor and thereby increase the frames stored in the buffer;
whereby in operation a time interval, between storing a transported frame in the buffer and coupling the corresponding voice signals to the telephone, is controlled by the telephone system.

### Brief Description of the Drawings

Example embodiments of the invention are discussed with reference to the accompanying drawings in which:
Figure 1 is a block diagram which broadly illustrates a typical network wherein speech signals are transferred via the Internet protocol between a PC and an other PC or a telephone set;
Figure 2 is a diagram which broadly illustrates examples of voice data signals and packets as these progress through the network in figure 1;
Figure 3 is a block schematic diagram illustrating an example of a gateway circuit shown in figure 1 in accordance with the invention;
Figure 4 is a block schematic diagram broadly illustrating an example of a PC, shown in figure 1, for among other functions, audibly reproducing speech from packetized speech data received via the Internet, in accordance with the invention; and
Figure 5 is a flow diagram which illustrates a sequence of functions by which either of the PC in figure 3 or the gateway in figure 4 is operable for in accordance with the invention.

### Description

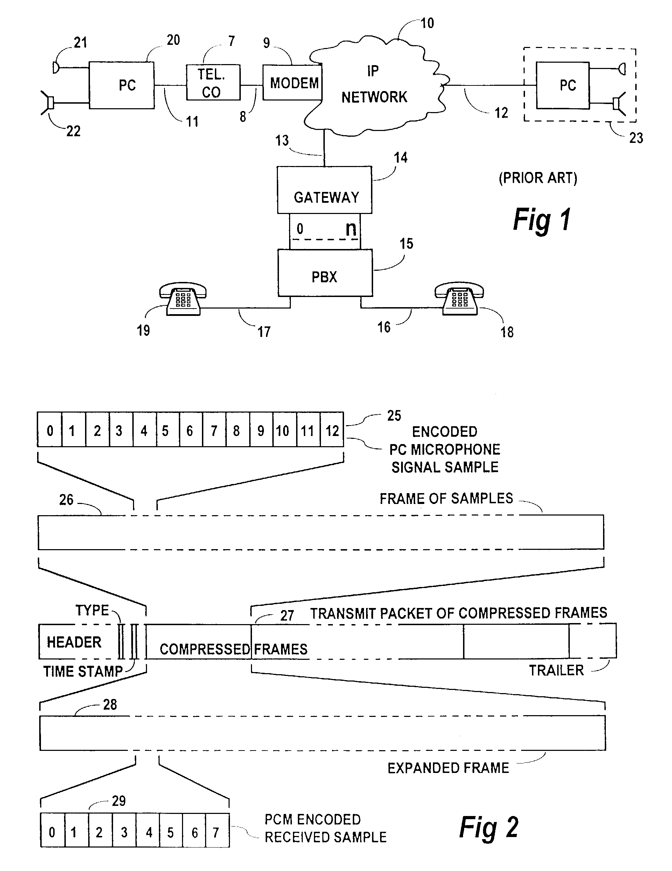

By way of introduction, a known arrangement for preparation and transmission of voice data via a network using the Internet protocol is briefly discussed. In figure 1 a telephone central office (CO) 7 is connected via a telephone line 8 to a modem interface with an IP network 10. A personal computer (PC) 20 coupled with a telephone line 11 which is serviced by the telephone CO 7 so that a PC user is able to dial a connection into the IP network 10. The PC 20 is shown to include a microphone 21 and a loudspeaker 22. By way of example a similar computer 23 is shown as being directly coupled to the IP network via a data link 12, such as an Ethernet link. A PBX 15, which may serve many telephones, is exemplified as being connected to serve telephones 18 and 19 via telephone lines 17 and 18. Each of the telephone lines thus far mentioned may be provided by any of a multitude of technologies provided that it is anything that will, over a period of time, provide a bidirectional communications path. For example the telephone line 11 may be provided by a radio link, an optical link, but typically are copper pairs operated in an analog signal protocol or perhaps in the ISDN protocol. The telephone lines 16 and 17 are likely to be copper pairs carrying signals in analog signal protocol or in time compression multiplex (TCM) protocol. Alternately these lines they could be provided by short range wireless air links. The PBX 15 is shown coupled to a gateway circuit 14 via a group of telephone lines 0-n. In a different example this coupling might be a multiple channel time division multiplex TDM loop. The gateway circuit 14 is connected via any convenient data link 13 to provide interface between the network 10 and the PBX 15. In another example not shown the PBX and gateway functions as well as a web information server function can be provided in a PC. In this case a PC structure having resources optimized toward processing both asynchronous information and synchronous information as disclosed by J. C. Lynch et al in United States patent No. 5,649,005 is preferred.

In operation the PC 20 takes samples, desirably at a rate of 8 kHz, that is every 125µ seconds, from the user's analog voice signal generated in the microphone 21. These samples are processed to produce encoded microphone signal samples. In figure 2 the encoded microphone signal samples are exemplified by a linear encoded sample 25, having thirteen binary bits per sample. As time passes a plurality of samples 25 are assembled into a fame or unit of samples as shown at 26. Usually depending upon the software application being used, between about 80 and 320 samples are collected into a frame or unit of voice data representing between about 10 to 40 milliseconds of sound. When enough samples are gathered the PC 20 compresses the frame into a fraction of the original frame size, in accordance with a speech compression algorithm, so that bandwidth limitations of the exemplified analog telephone line 11 may be met. If however a broader bandwidth coupling to the IP network 10 is available, as for example the link 12 there is no need for such compression. One or more frames are collected into a payload, which is packetized between header and trailer portions to form a packet 27. Each header includes the address of the intended receiver, a so called time stamp, indicating the time of transmission, as well as a type of payload identification. In this example the payload is indicated as being data of a periodic origin, that is encoded voice samples data. Packets are usually transmitted more or less regularly but may have to wait for other traffic traversing the IP network. The packet 27 is transported through the IP network 10 and eventually arrives at its intended destination, which for the purpose of illustration is assumed to be the gateway circuit 14. The gateway circuit 14 expands each of the compressed frames by processing each received frame in accordance with an expansion algorithm, to substantially regenerate the samples of voice data, at a rate determined by the PBX. This is seldom ever exactly the rate at which they were originally sampled. The expansion algorithm is substantially a complement of the compression algorithm, however in this example the expansion of the digital signal sample involves translation to a telephone eight bit pulse code modulation (PCM) standard. The PBX 15 has assigned a communications path via one of the links 0-n between one of the telephones 18 and 19 and the gateway circuit 14, for delivery of a PCM sample every 125µ seconds, to the user's telephone set.

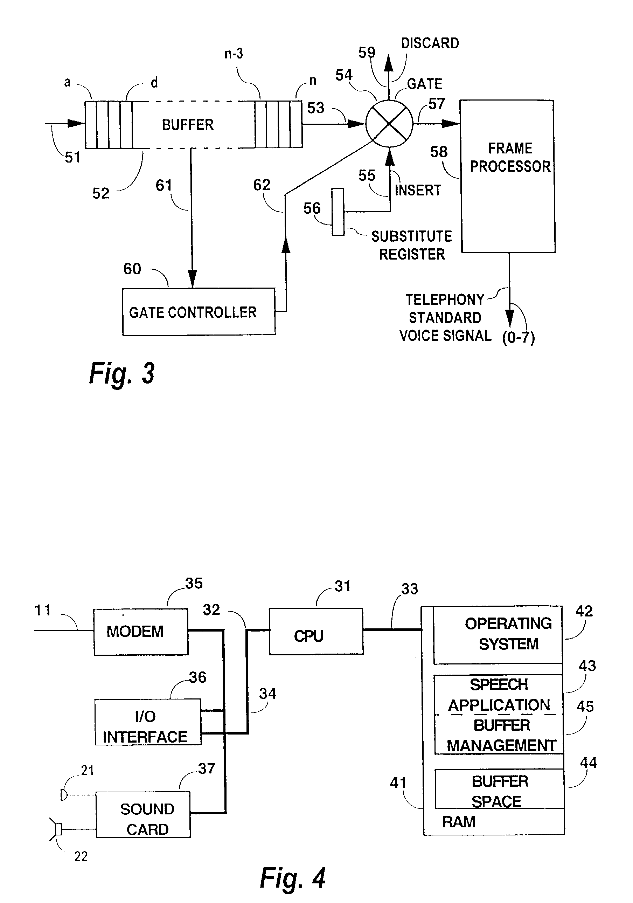

As before discussed it is the effect of the IP network as well as the effect of non-synchronization which from time to time introduces noticeable degradation in the reproduction of audible speech from packetized speech data signals. The gateway circuit, as exemplified in Figure 3, reduces the significance of these effects. Packets from the telephone data link 13 are converted to binary signal form and presented via a signal path 51 to a buffer 52. The buffer 52 includes frame storage locations (a-n) and is driven by each packet reception event to store the compressed frames of encoded speech data for subsequent extraction. Depending upon the particular structure of the buffer 52, the payload of each packet is either stored in serial order in which the packets are being received, for later extraction, or is stored in an order in accordance with the packet's associated time stamp. Frame extraction from the buffer 52 is driven by a frame processor 58. The frame processor may be provided by a specialized digital signal processor (DSP) or a general purpose microprocessor, being suitably programmed. The rate of frame extraction is determined by the requirement that the frame processor to deliver telephone standard voice samples at about the 125µ second rate to one of the links 0-n. Hence in normal operation the frames are extracted from the buffer 52 one after another at a regular rate being governed by the rate of regeneration of the telephone standard voice samples. Each frame is extracted from the buffer 52 via a signal path 53, by a gate 54, and normally delivered to the frame processor 58 via a signal path 57. A gate controller 60 is connected to the gate 54 by a control path 62 such that the normal operation of the gate 54 may be altered and thereby effectively alter the rate of extraction. The state of frame occupancy of the of the buffer 52 and the arrival times of packets are monitored via a path 61 by the gate controller 60. Accordingly the number of frames stored within the of the buffer 52 is optimized. The gate controller 60 increases the number of frames stored by effectively decreasing the regular rate and reduces the number of frames stored by effectively increasing the regular rate. For example in order to increase the regular rate, the gate controller may accelerate the effective rate of extraction by controlling the gate 54 to extract two frames instead of one, and passing one of the two frames to the frame processor 58, via the signal path 57, while discarding the other of the two frames via a terminated path 59. In order to decrease the regular rate, the gate controller may decelerate the effective rate of extraction by controlling the gate 54 to extract a substitute frame from a substitute register 56 via a signal path 55 and pass the substitute frame to the frame processor 58 instead of extracting a frame from the buffer 52. The substitute frame may represent any predetermined series of voice samples. In one example it is preferred that the frame represents silence and is limited to being substituted following an extracted frame of substantially silent voice samples.

In the PC 20, in figure 1, is broadly exemplified to an extent convenient for discussion of the invention within a context involving operation of an application such as COOLTALK or the like. A central processing unit (CPU) 31 is at the heart of the PC. Recently PC assemblers have been tending to use any of several microprocessors manufactured by Intel or Motorola, for this purpose. The CPU 31 is coupled via a memory bus 33 to a random access memory (RAM) 41 having stored therein an operating system 42, a speech application 43, a reserved buffer space 44 for and a jitter buffer function operated by the speech application 43. In association with the speech application 43, the RAM 41 includes a jitter buffer management instruction set 45 for altering a rate of extraction of units of voice data from the jitter buffer without effectively altering the rate of delivery of units of voice data to the CPU 31. Incoming packets with frames of voice data are received from the telephone line 11 by a modem 35. The modem 35 transfers a binary signals representation of a received packet to a peripheral bus 34 from whence it is transferred via a bus 32 to the CPU 31 under the control of an input output interface unit 36. The CPU 31 responds to the received packet in accordance with the speech application to store the frames in the buffer space, taking notice of the time stamp information having been received in the packet. On a regular basis as determined by a software clock the CPU will normally extract a frame from the buffer space 44 and generate therefrom a series of voice data samples, for example similar to that illustrated at 25 in figure 2. These voice data samples are transferred to a sound card 37 via the buses 32 and 34 under the control of the input output interface unit 36. The sound card responds to the voice data samples by audibly reproducing the speech they represent at the loudspeaker 22.

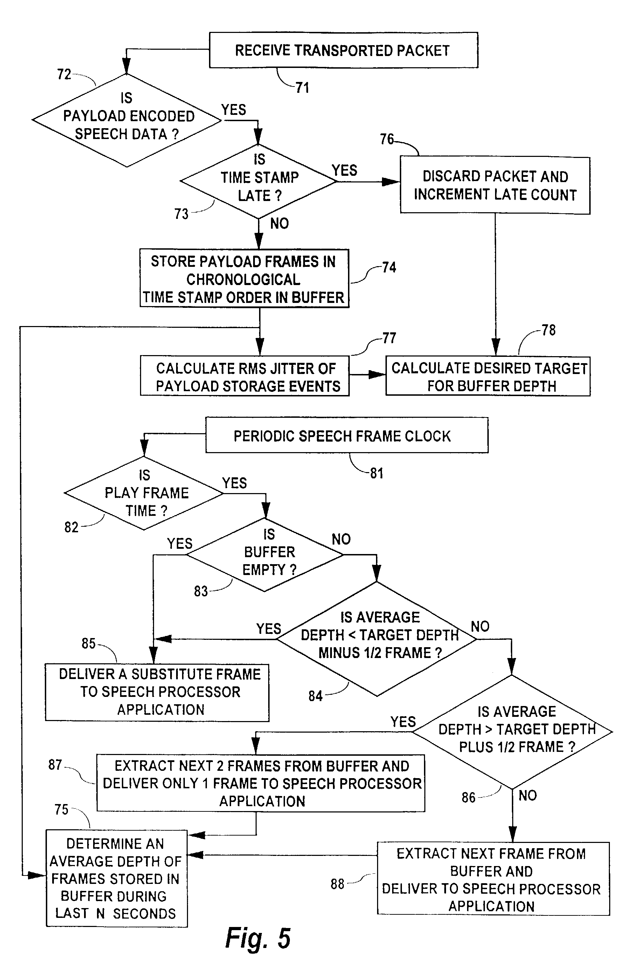

As before discussed it is the effect of packet data transport as well as the effect of non-synchronization which from time to time introduces noticeable degradation in the reproduction of audible speech from packetized speech data signals. The flow diagram in figure 5 is one example of a method for controlling a flow of units of voice sample data, preparatory to audibly reproducing speech signals from packetized units of the voice data samples having been transmitted from a transmission source via a packet communications facility. The principle of operation illustrated by the flow diagram is applicable relation to either of figures 3 and 4, however for convenience of description are referenced to figure 4. Illustrated functions of receive a transported packet 71 and subsequently store a payload 74 are part of the speech application 43 in the RAM 41. The normal function of the speech application 43 is modified in accordance with the flow diagram by the jitter buffer management instruction set 45. At the beginning of an Internet voice call the buffer space 44 is empty. When a packet is received it is checked by an interrogation function 72. If the payload is speech sample data, the time stamp is compared by interrogation function 73, with any previously received time stamp for which there yet remains a frame in the jitter buffer. If there is a frame of earlier origin or no frame, the frame or frames of the payload are stored by the function 74. If among any stored frames there is none of earlier origin, the packet is deemed to have been received too late and it is discarded while a late count is incremented, as shown at function block 76. Function block 77 requires generation a root mean squared (RMS) value on the basis of differences of time between subsequent payload storage events. The RMS value and the number of late counts are used as the reception and storage payloads continues to calculate a desired target for a number of frames stored in the jitter buffer. This is referred to as buffer depth. An average of the buffer depth is determined in function block 75 which keeps a running tally of the frame or frames stored during each payload storage event. As will be discussed later the running tally is used in determining an average buffer depth.

The functions described in the preceding paragraph provide for the storage of payloads to the exclusion of late payloads and for data based on these events. The occurrences of these events are dependent upon packet origin at a transmitting entity and packet transport via the IP network. In contrast the functions described in the following paragraph are dependent upon a local clock in the receiving entity, which for all practical purposes is unsynchronized with respect to the transmitting entity.

A speech frame clock rate is dependent upon the rate of utilization of individual encoded samples in the sound card 27 or upon the rate of an assigned TDM channel occurrence in the PBX 15. An occurrence of a speech frame clock indicated at 81 is a demand that a frame of speech sample data be delivered to a frame processor, for example as implemented in the CPU 31 by the speech processor application 43. The majority of speech frame clock occurrences will result in a single frame being extracted from the jitter buffer and being delivered to the speech processor application. A speech frame clock occurrence is detected at 82 and results in the jitter buffer being checked for the presence of at least one frame, as shown at 83. If the jitter buffer is empty a substitute frame is delivered as required by a function block 85. If there is one frame or more in the jitter buffer, the results of the functions 78 and 75 are compared at interrogation function 84. If the average buffer depth is short of the target by less than half a frame, a substitute frame is delivered as required by the function block 85. On the other hand if the buffer depth is not short of the target by less than half a frame, the results of the functions 78 and 75 are compared at interrogation function 86. Here if the average buffer depth exceeds the target by more than half a frame, function 87 extracts the next two frames from the jitter buffer and delivers only one of the extracted frames to the frame processor. The remaining extracted frame is discarded. If the average buffer depth is within half a frame of the target, it is deemed to be satisfactory and a singe frame is extracted from the jitter butter and delivered to the frame processor.

By managing the jitter buffer depth as hereinbefore disclosed, delay is dynamically adjusted toward an optimal minimum while being balanced against, the requirement of reduced occurrences of frame losses and substitutions. Those frame irregularities that do that do occur tend to be distributed and hence lesser degradation of speech reproduction is perceived.

In one example, the value of the substitute frame in function 85 is chosen to be one of a silent speech frame and an interpolation frame. The choice at any one instant it dependent upon the preceding frame having been substantially representative of an absents of voiced sounds or a presence of voiced sounds.

In an other example the substitute frame in function 85 is chosen to be a silent speech frame with its delivery being held in abeyance until one silent frame extraction and delivery has occurred, or until several contiguous silent frame extractions and deliveries have occurred. This has the advantage of adding to the buffer depth without introducing any irregularity into the generated audible speech.

A realization of the desired target in function 78 has been calculated as follows:
depth = RMS jitter from function 77 multiplied by a constant A
If discarded packets in function 76 is greater than a constant B%
then Target = the depth multiplied by a constant C
If discarded packets in function 76 is less than a constant D%
then Target = the depth multiplied by a constant K
where each of the constants A, B, C and K are which are optimized experimentally.

It is envisaged that some further improvement can be realized by employing sophisticated statistical practices to determine the preferred target depth for minimal delay and for defining the permissible range in the target depth before an adjustment need occurs.

In view of the preceding disclosure other embodiments and variations will come to the minds of those skilled in the art and such are within the scope of the invention as defined in the appended claims.

In summary, degradations in packetized voice communications received by a non-synchronized entity, via a packet network, are reduced by adjusting a depth of storage in a jitter buffer of the receiving entity. Units of voice samples data are stored in the jitter buffer as they are received. Stored units are normally extracted and delivered to a processor one at a time at a regular rate for the generation of audible speech. From time to time the rate of extraction can be accelerated by extracting two units while delivering only one. Also the rate of extraction can be retarded by not extracting a unit while delivering a substitute unit in place of the unit that would normally have been extracted. The depth of storage is thereby controllable in response to packet reception events such that delay is minimized while yet providing sufficient delay to smooth variances between reception events.

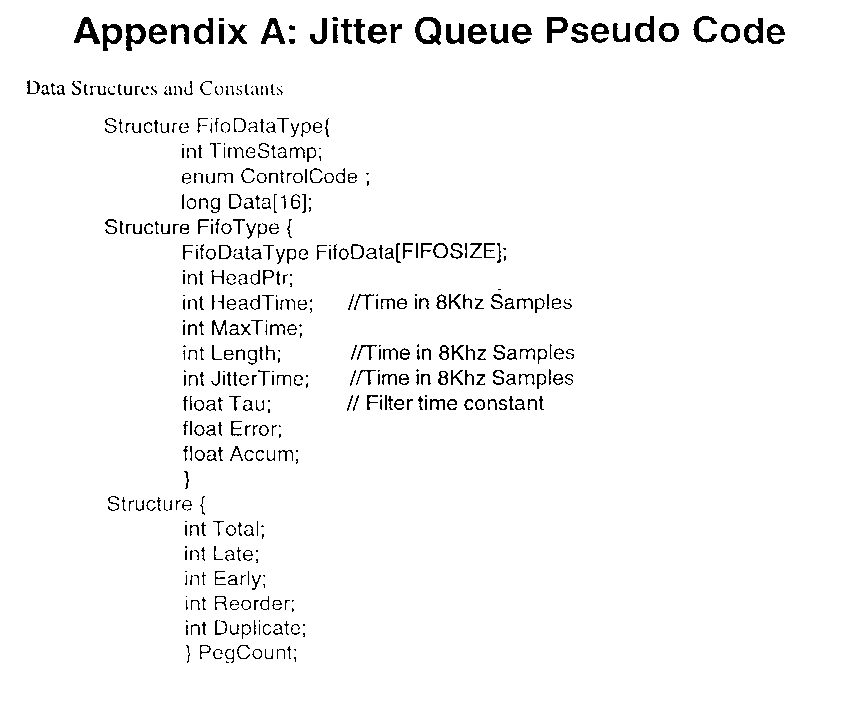

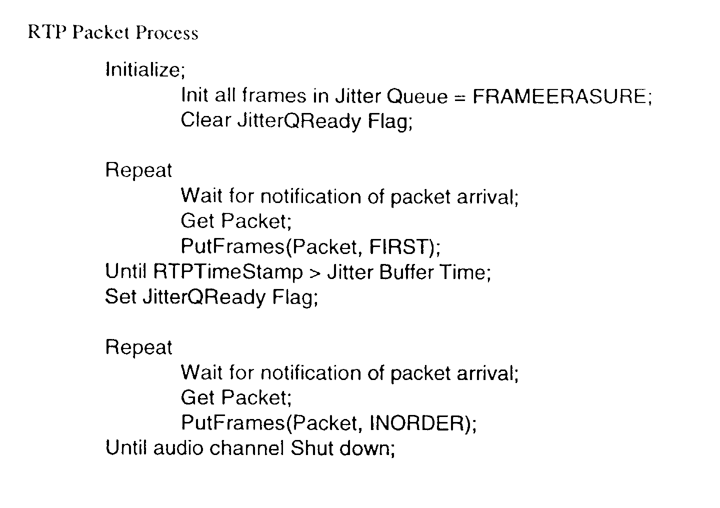

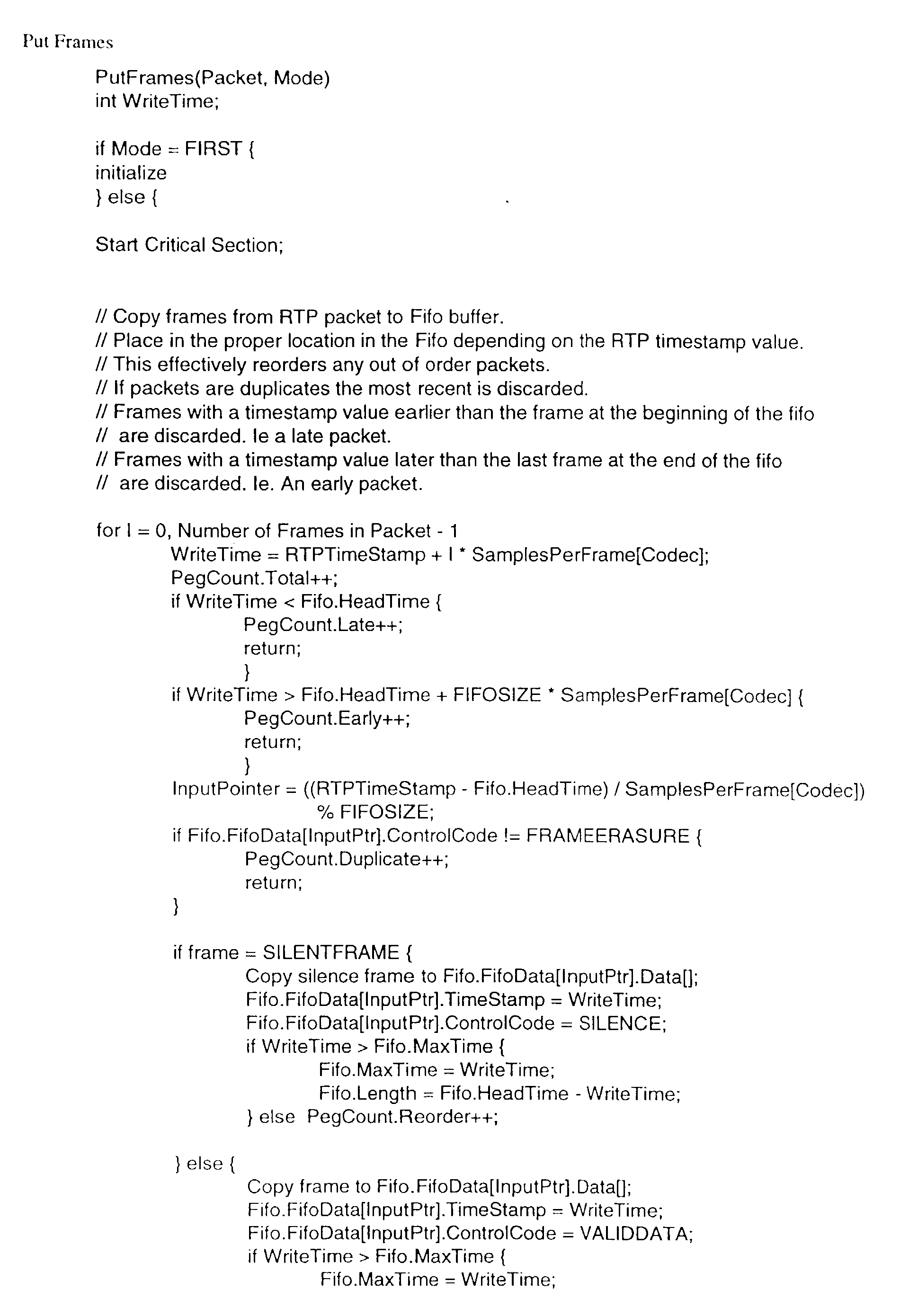

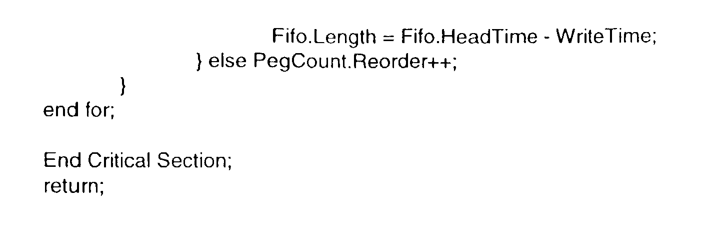

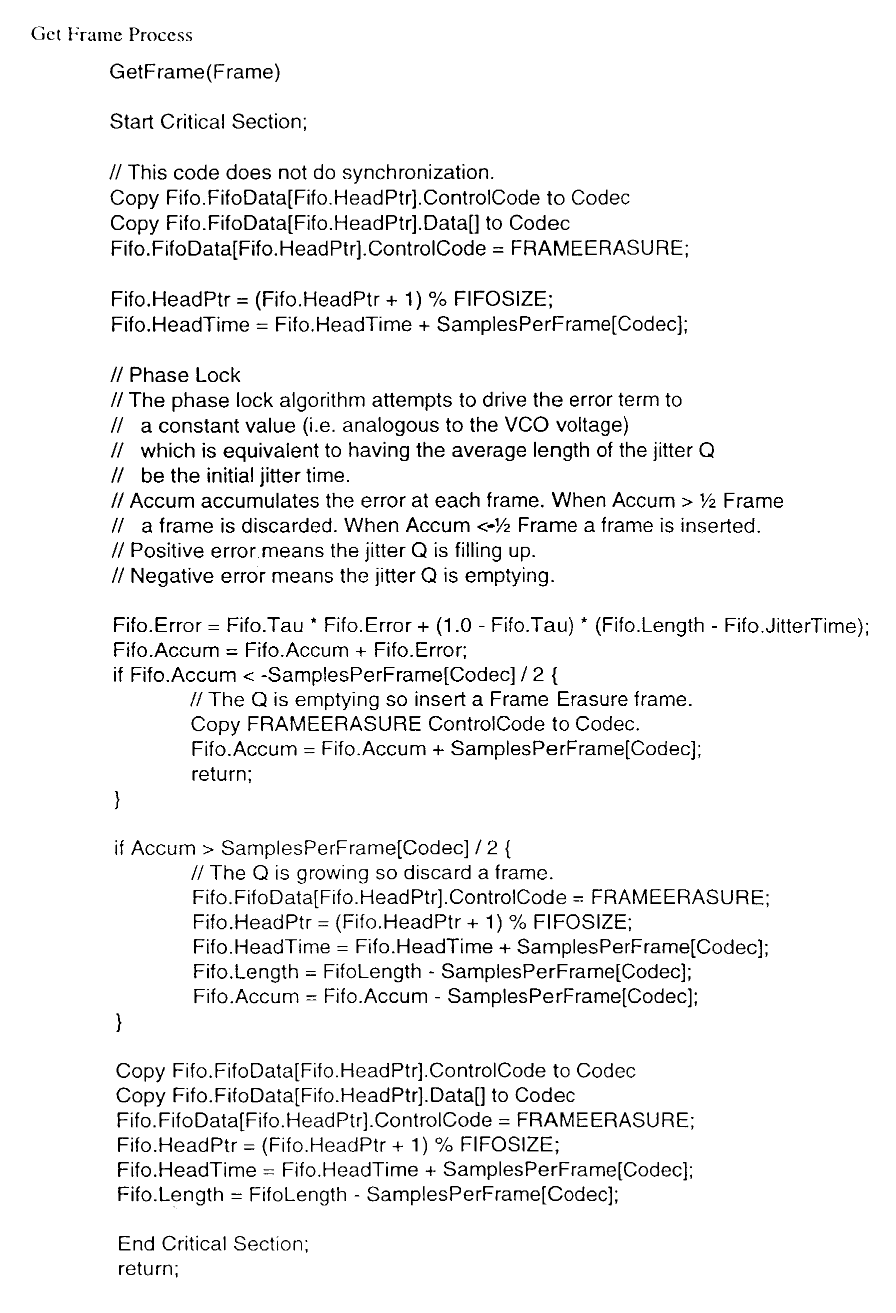

## Claims

1. A method for controlling a flow of units of voice sample data, preparatory to audibly reproducing speech signals from packetized units of the voice data samples having been received in packet payloads via a communications facility from an unsynchronised source, the method for controlling the flow of units comprising the steps of:
a) receiving packets of the units of voice data samples and one after an other storing the units of voice data samples;
b) delivering the units stored in step a) one after an other, at a regular rate, for audible reproduction of said speech signals;
c) from time to time determining a difference between a target number and the number of stored units awaiting delivery; and
d) altering said regular rate to change an average number of the stored units awaiting delivery, whereby an average delay in delivery of the units stored in step a) is altered toward a target delay.

2. The method according to claim 1 wherein the packets received in step a) each includes a time stamp and the units of voice data samples are delivered in step b) in chronological order.

3. A method according to claim 2 further comprising the step of, discarding any received packet having a time stamp which is earlier than an earliest time stamp in association with a presently stored frame.

4. A method according to claim 1 comprising the further steps of;
e) determining a tendency in a range of time intervals between the occurrences of packet payload storage in step a); and
i) in a case where the range tends toward a reduction, the delay in delivery is correspondingly reduced by momentarily increasing said regular rate, and
ii) in a case where the range tends toward an increase, delivery is correspondingly increased by momentarily reducing said regular rate.

5. A method according to any one of claims 1 to 4, wherein the regular rate is increased by extracting two of said units in a time in which only one unit is normally extracted at said regular rate, and delivering only one of the two extracted units for use in audible generation of the speech signal, before extracting and delivering the next unit.

6. A method according to any one of claims 1 to 4, wherein the regular rate is retarded by not extracting the next of said units in a time at which one unit normally extracted at said regular rate and delivering a substitute unit and the previously retrieved unit for producing a speech signal before retrieving and using said next of said units.

7. The method according to claim 1, wherein, while there is at least one stored unit, step a) is limited to storing a received packet payload being associated with a time stamp which is of a later time than a time stamp associated with said at least one unit, and otherwise discarding the received packet payload; and
wherein the target number is related to differences between times of packet payload storage events

8. A control means for controlling a flow of units of voice sample data to a processing means being operative in response to clocking pulses for audibly reproducing speech signals from packetized units of the voice data samples having been transmitted from a transmission source via a packet communications facility, the control means comprising:
buffer means for receiving packets of the units of voice data samples, and one after another storing the units;
gating means for extracting the stored units one after an other, at a regular rate, dependent upon said clocking pulses, and delivering a unit to the processing means whereby speech signals are audibly reproduced;
means for altering said regular rate, in response to a difference between a target number and the number of units stored in the buffer means, whereby an average delay in delivery of the stored units is altered toward a target delay.

9. A control means according to claim 8 further comprising:
means for determining said difference.

10. A control means according to claim 8 further comprising:
means for determining a tendency in a range of time intervals between the occurrences of packet reception by the buffer means; and
means for adjusting said target number, said means being responsive to
i) the range tending toward a reduction by reducing the target number, and
ii) the range tending toward an increase by increasing the target number.

11. A control means according to claim 8 wherein the buffer means is limited while occupied by at least one unit, to storing a payload being associated with a time stamp which is of a later time than the time of a time stamp associated with said at least one unit.

12. A control means according to claim 8 further comprising:
a substitute register for storing a substitute unit ; and
wherein the means for altering said regular rate controls the gating means to extract two units from the buffer means in response to one of the clock pulses, to reduce the average delay toward the delay target, and causes the gating means to deliver a copy of the substitute unit from the substitute register, to increase the average delay toward the delay target.

13. A control means according to claim 8 further comprising:
a substitute buffer having a substitute unit permanently stored therein; and
wherein the means for altering said regular rate controls the gating means to deliver two units from the buffer means in response to one of the clock pulses, to reduce the average delay toward the delay target, and causes the gating means to deliver a substitute unit from the substitute buffer, to increase the average delay toward the delay target.

14. A telephone system for serving a plurality of telephones, comprising:
a buffer for storing frames of voice data from packets transported via an IP network;
a frame processor for transforming frames of voice data into voice signals consistent with a standard operating voice signal protocol of the telephone system;
a circuit switch for coupling a one of the plurality of telephones to receive the voice signals;
a substitute register for storing at least one substitute frame of voice data; and
a gate means responsive to a demand from the frame processor for performing any one of the following steps;
i) extracting two frames of voice data from the buffer while delivering only one of said two frames to the frame processor and thereby reduce the frames stored in the buffer,
ii) extracting only one frame of voice data from the buffer and delivering said one frame to the frame processor, and
iii) delivering a copy of the substitute frame of voice data in the substitute register to the frame processor and thereby increase the frames stored in the buffer;
whereby in operation a time interval, between storing a transported frame in the buffer and coupling the corresponding voice signals to the telephone, is controlled by the telephone system.

15. A method of operating a buffer in a system wherein over a period of time bursty data is received at a rate independent but somewhat similar to a periodic rate at which the data is required for utilization by the system; the method comprising the steps of:
a) providing said buffer with a predetermined amount of storage space for storing data;
b) storing the data in the buffer as the data is received;
c) extracting a unit of the stored data in response to each requirement from the system for utilization of data and delivering the unit of extracted data to the system ;
d) in step c), from time to time in response to a tendency toward the overflow condition, extracting another unit of the stored data and discarding the extracted data; and
e) in step c), from time to time in response to a tendency toward the underflow condition, not extracting a unit of the stored data and delivering a substitute unit of data to the system.
wherein an occurrence of an underflow condition or an occurrence of an overflow condition is substantially mitigated during said period of time.
